Europäisches Patentamt

European Patent Office

Office européen des brevets

(11) Veröffentlichungsnummer: **0 288 868**

**A2**

(12) **EUROPÄISCHE PATENTANMELDUNG**

(21) Anmeldenummer: **88106183.2**

(22) Anmeldetag: **19.04.88**

(51) Int. Cl.⁴: **H01R 4/38 , H01R 4/30**

(30) Priorität: **30.04.87 DE 3714500**

(43) Veröffentlichungstag der Anmeldung:
**02.11.88 Patentblatt 88/44**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Debus, Jürgen**
**Am Ebersbach 50**
**D-6344 Dietzhölztal 1(DE)**

(74) Vertreter: **Vogel, Georg**
**Hermann-Essig-Strasse 35**
**D-7141 Schwieberdingen(DE)**

(54) **Vorrichtung zum elektrisch leitenden Verbinden von zwei Bauteilen.**

(57) Die Erfindung betrifft eine Vorrichtung zum elektrisch leitenden Verbinden der ebenen Bereiche von zwei mit einer elektrisch schlecht oder nicht leitenden Oberflächenschicht versehenen Bauteilen aus Metall, bei der die ebenen Bereiche fluchtende Bohrungen zur Aufnahme einer aus Schraube und Mutter bestehenden Schraubverbindung aufweisen. Eine elektrisch leitende Verbindung mit von einer Seite nicht einsehbaren beschädigten Stellen in der Oberflächenschicht der Bauteile wird dadurch geschaffen, daß die Bohrung des der Mutter zugekehrten Bauteils als Aufnahme erweitert ist, daß auf der freien Seite der Mutter ein Krallenbügel unverlierbar und unverdrehbar festgelegt ist, der sich mit ausgestanzten Krallen seiner Seitenschenkel auf der der Mutter zugekehrten Seite des der Mutter zugeordneten Bauteils abstützt, und daß die Seitenschenkel des Krallenbügels U-förmig abgewinkelte Verlängerungen aufweisen, die durch die Aufnahme des der Mutter zugekehrten Bauteils hindurchgeführt sind und sich mit weiteren ausgestanzten Krallen außerhalb der Bohrung auf der Seite des der Mutter abgekehrten Bauteils abstützen, die dem der Mutter zugekehrten Bauteil zugekehrt ist.

EP 0 288 868 A2

## Vorrichtung zum elektrisch leitenden Verbinden von zwei Bauteilen

Die Erfindung betrifft eine Vorrichtung zum elektrisch leitenden Verbinden der ebenen Bereiche von zwei mit einer elektrisch schlecht oder nicht leitenden Oberflächenschicht versehenen Bauteilen aus Metall, bei der die ebenen Bereiche fluchtende Bohrungen zur Aufnahme einer aus Schraube und Mutter bestehenden Schraubverbindung aufweisen.

Um einen elektrischen Kontakt im Bereich der Schraubverbindung zu erhalten, war es bisher üblich, den um die Bohrungen liegenden Teil der Oberflächenschicht wieder zu entfernen oder schon bei der Aufbringung der Oberflächenschutzschicht dafür zu sorgen, daß diese Bereiche keine Oberflächenschutzschicht erhalten. Dies bedeutet bei der Herstellung aber stets einen zusätzlichen Arbeitsgang, der eine Verteuerung mit sich bringt. Außerdem müssen die Schraubverbindungen genau festliegen und dürfen später nicht verlagert werden. Dies ist aber häufig nicht gewährleistet. Es sei nur an einen sich ändernden Ausbau eines Schaltschrankes erinnert, bei dem Trägerschienen hinzukommen oder an anderer Stelle mit dem Schrankkorpus verbunden werden.

Wie das DE-GM 80 01 886 zeigt, kann ein Bauteil mit Gewinde an einem plattenförmigen Bauteil dadurch elektrisch leitend angebracht werden, daß die Mutter auf der dem Bauteil zugekehrten Seite mit vorstehenden Zähnen oder dgl. versehen ist, die beim Festziehen der Mutter die Oberflächenschicht des Bauteils durchdringen und direkt mit dem Bauteil eine elektrisch leitende Verbindung herstellen. Mit dieser bekannten Mutter lassen sich aber keine zwei Bauteile elektrisch leitend miteinander verbinden, wenn beide mit einer - schlecht oder nicht leitenden Oberflächenschicht versehen sind. Dies könnte erreicht werden, wenn auch der Kopf der Schraube einer Schraubverbindung auf der dem Bauteil zugekehrten Seite mit Zähnen oder dgl. versehen wäre. Dies hat jedoch den Nachteil, daß auch im Bereich des Kopfes die Oberflächenschicht zerstört wird. Bei Veränderung oder Verlagerung der Schraubverbindungen bleiben dann die zerstörten Bereiche der Oberflächenschichten beider Bauteile einsehbar.

Es ist Aufgabe der Erfindung, eine Vorrichtung der eingangs erwähnten Art zu schaffen, bei der die beiden Bauteile elektrisch leitend so miteinander verbunden werden können, daß dabei zumindest bei einem Bauteil die Oberflächenschicht nur an einer nicht einsehbaren Stelle zerstört wird, so daß eine nachträgliche Verlagerung der Schraubverbindungen möglich ist, ohne die zerstörten Bereiche der Oberflächenschicht einsehen zu können.

Diese Aufgabe wird nach der Erfindung dadurch gelöst, daß die Bohrung des der Mutter zugekehrten Bauteils als Aufnahme erweitert ist, daß auf der freien Seite der Mutter ein Krallenbügel unverlierbar und unverdrehbar festgelegt ist, der sich mit ausgestanzten Krallen seiner Seitenschenkel auf der der Mutter zugekehrten Seite des der Mutter zugekehrten Bauteils abstützt, und daß die Seitenschenkel des Krallenbügels U-förmig abgewinkelte Verlängerungen aufweisen, die durch die Aufnahme des der Mutter zugekehrten Bauteils hindurchgeführt sind und sich mit weiteren ausgestanzten Krallen außerhalb der Bohrung auf der Seite des der Mutter abgekehrten Bauteils abstützen, die dem der Mutter zugekehrten Bauteil zugekehrt ist. Bei dieser Ausgestaltung wird der Kopf der Schraube von der einsehbaren Seite her eingeführt, so daß dieser nur auf der Oberflächenschicht des der Mutter abgekehrten Bauteiles aufliegt. Die Zerstörung der Oberflächenschicht des dem Kopf der Schraube zugekehrten Bauteils erfolgt auf der nicht einsehbaren Seite, die dem der Mutter zugekehrten Bauteil benachbart ist. Die Verlängerungen der Seitenschenkel des Krallenbügels greifen durch die Aufnahme in dem der Mutter zugekehrten Bauteil hindurch und bilden die Krallen, die sich auf der Seite des der Mutter abgekehrten Bauteils abstützen, die dem der Mutter zugekehrten Bauteil zugekehrt ist. Der Krallenbügel und die Mutter bilden eine Einheit, die in die Aufnahme des der Mutter zugekehrten Bauteils eingeklipst werden kann. Die Schraube braucht dann nur durch die Bohrung und die Aufnahme der beiden Bauteile hindurchgeführt und in die Gewindebohrung der Mutter eingeschraubt zu werden.

Die unverlierbare Festlegung des Krallenbügels an der Mutter wird einfach dadurch erreicht, daß der Krallenbügel in seinem Mittelsteg einen Durchbruch aufweist, durch den ein im Querschnitt darauf angepaßter Ansatz der Mutter geführt ist, und daß durch Verformung des Ansatzes der Krallenbügel unverlierbar mit der Mutter verbunden ist.

Ist dabei noch vorgesehen, daß die Mutter umfangsseitig einander gegenüberliegende Abflachungen aufweist und daß die Seitenschenkel des Krallenbügels die Mutter auf zwei einander gegenüberliegenden Seiten einschließen, während am Mittelsteg des Krallenbügels vorgesehene Lappen auf die Abflachungen der Mutter abgewinkelt sind und den Krallenbügel unverdrehbar an der Mutter festlegen, dann wird der Krallenbügel unverdrehbar an der Mutter gehalten, auch wenn der Durchbruch im Mittelsteg des Krallenbügels und der Ansatz der Mutter runden Querschnitt aufweisen. Die Mutter selbst kann quadratischen Querschnitt oder runden Querschnitt mit den beiden Abflachungen aufweisen.

Eine doppelte Kontaktgabe der Seitenschenkel des Krallenbügels mit dem der Mutter zugekehrten Bauteil wird nach einer Ausgestaltung dadurch erhalten, daß die Verlängerungen jeweils zwischen zwei Krallen der Seitenschenkel weitergeführt und U-förmig abgewinkelt sind.

Das Einklipsen der Einheit aus Mutter und Krallenbügel in die Aufnahme des der Mutter zugekehrten Bauteils wird dadurch erleichtert, daß die U-förmig abgewinkelten Verlängerungen zu den Wänden der Aufnahme hin selbst Aufnahmen für das der Mutter zugekehrte Bauteil bilden.

Eine doppelte Kontaktgabe der Verlängerungen mit dem der Mutter abgekehrten anderen Bauteil wird einfach dadurch geschaffen, daß die Verlängerungen der Seitenschenkel im Endbereich durch Schlitze unterteilt sind und jeweils in zwei Krallen auslaufen. Die Verlängerungen können die Endstellung der festgezogenen Schraubverbindung dadurch bestimmen, daß sie mit der ersten Abwinkelung etwa parallel zur zugekehrten Seite des der Mutter zugekehrten Bauteils verlaufen und sich zwischen die Mutter und das Bauteil erstrecken.

Das Durchdringen der Oberflächenschicht wird dadurch erleichtert, daß die Krallen und die weiteren Krallen des Krallenbügels in scharfe Kanten oder Spitzen auslaufen.

Der Krallenbügel ist als billiges Teil dann herstellbar, wenn vorgesehen ist, daß der Krallenbügel als Stanz-und Biegeteil ausgebildet und hergestellt ist und aus federndem Metall besteht. Durch die Federeigenschaft werden die Krallen stets unter Spannung an den zugeordneten Bauteilen gehalten. Dadurch ist ein kleiner Kontaktübergangswiderstand an den Abstützstellen der Krallen sichergestellt.

Nach einer bevorzugten Ausgestaltung ist vorgesehen, daß die Schraube mit dem Kopf auf der einsehbaren Seite des der Mutter abgekehrten Bauteils angeordnet ist, damit die Schraubverbindung jederzeit verlagert werden kann, ohne Zeitstörungsbereiche der Oberflächenschicht zu hinterlassen.

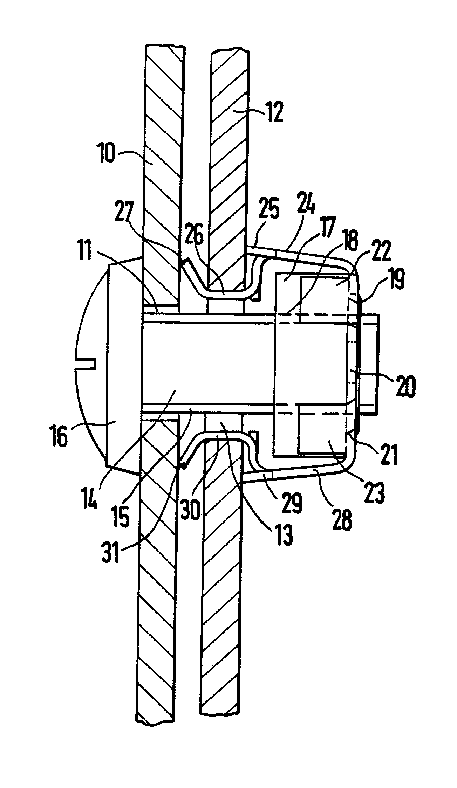

Die Erfindung wird anhand eines in der Zeichnung im Schnitt dargestellten Ausführungsbeispiels näher erläutert.

Die Schraubverbindung mit der Schraube 14 und der Mutter 17 erfolgt über die Bohrung 11 und die Aufnahme 13 der beiden Bauteile 10 und 12, die im Verbindungsbereich eben ausgebildet sind. Das Bauteil 10 ist auf der einsehbaren Seite angeordnet und die Schraube 14 wird mit dem Kopf 16 von dieser Seite aus in die Bohrung 11 eingeführt. Die Aufnahme 13 in dem der Mutter 17 zugekehrten Bauteil 12 ist erweitert. Die Mutter 17 ist mit dem Krallenbügel 20 verbunden. Die Mutter 17 trägt auf der dem Bauteil 12 abgekehrten Seite den Ansatz 19, der durch den Durchbruch 21 im Mittelsteg des Krallenbügels 20 geführt und dann verformt ist. Damit wird der Krallenbügel 20 unverlierbar an der Mutter 17 festgelegt. Ist der Durchbruch 21 im Mittelsteg des Krallenbügels 20 und der Ansatz 19 der Mutter 17 im Querschnitt quadratisch, dann ist der Krallenbügel 20 auch unverdrehbar mit der Mutter 17 verbunden. Aus fertigungstechnischen Gründen können der Durchbruch 21 im Mittelsteg des Krallenbügels 20 und der Ansatz 19 auch runden Querschnitt aufweisen. Der Krallenbügel 20 wird dann mit den abgebogenen Lappen 22 und 23 auf zwei einander gegenüberliegenden Seiten der im Querschnitt quadratischen Mutter 17 unverdrehbar gehalten.

Die Mutter 17 kann auch im wesentlichen runden Querschnitt aufweisen und zwei diametral angeordnete Abflachungen tragen, auf die die Lappen 22 und 23 abgewinkelt sind. Die Aufnahme 13 kann quadratischen oder auch runden Querschnitt aufweisen. Die Verlängerungen 26 und 30 sind an den Querschnitt der Aufnahme 13 angepaßt, so daß die Einheit aus Mutter 17 und Krallenbügel 20 eingeklipst werden kann.

Die Seitenschenkel 24 und 28 des Krallenbügels 20 schließen die beiden von den Lappen 22 und 23 nicht belegten Seiten der Mutter 17 ein und stützen sich jeweils über zwei Krallen 25 bzw. 29 auf der Mutter 17 zugekehrten Seite des Bauteils 12 ab. Zwischen den beiden Krallen 25 bzw. 29 ist der Seitenschenkel 24 bzw. 29 als Verlängerung 26 bzw. 30 weitergeführt und U-förmig abgewinkelt. Die Verlängerungen 26 und 30 bilden zur Wand der Aufnahme 13 hin selbst Aufnahmen für das Bauteil 12, so daß die Einheit aus Mutter 17 und Krallenbügel 20 leicht in die Aufnahme 13 eingerastet oder eingeklipst werden kann. Die Aufnahmen der Verlängerungen 26 und 30 sind dabei auf die Dicke des Bauteils 12 angepaßt.

Der Krallenbügel 20 ist als Stanz-und Biegeteil aus federndem Metall hergestellt. Die Enden der Verlängerungen 26 und 30 sind durch Schlitze unterteilt, so daß sich jeweils zwei Krallen 27 und 31 auf der dem Bauteil 12 zugekehrten Seite des Bauteils 10 abstützen. Die Schraube 14 wird durch die Bohrung 11 und die Aufnahme 13 hindurchgeführt und mit ihrem Gewindeteil 15 in die Gewindebohrung 18 der Mutter 17 eingeschraubt. Beim Festziehen der Schraube 14 verformen sich die Seitenschenkel 24 und 28 und auf die Krallen 25 und 29 und die weiteren Krallen 27 und 31 wirken Spannkräfte ein. Die scharfen Kanten oder Spitzen der Krallen 25,27,29 und 31 durchdringen die Oberflächenschichten der Bauteile 10 und 12, so daß eine eindeutige elektrische Verbindung über den Krallenbügel 20 hergestellt wird. Die auf die Krallen 25,27,29 und 31 einwirkenden Kräfte stellen kleine Kontaktübergangswiderstände sicher. Die Verlängerungen 26 und 30 verlaufen mit ihren ersten, von den Seitenschenkeln 24 und 28 ausgehenden Abwinkelungen etwa parallel zur zugekehrten Seite des Bauteils 12 und erstrecken sich zwischen das Bauteil 12 und die Mutter 17, so daß sie als Begrenzung für die Spannbewegung des Krallenbügels 20 dienen können.

Bezeichnet man die dem Kopf 16 der Schraube 14 zugekehrte Seite des Bauteils 10 als Vorderseite, dann werden Oberflächenschichten nur auf den Rückseiten der Bauteile 10 und 12 durchstoßen und beschädigt. Wird die Schraube 14 gelöst, dann ist von der Vorderseite aus keine beschädigte Stelle der Oberflächenschichten der Bauteile 10 und 12 einzusehen. Die Schraubverbindung kann daher ohne weiteres verlagert werden.

## Ansprüche

1. Vorrichtung zum elektrisch leitenden Verbinden der ebenen Bereiche von zwei mit einer elektrisch schlecht oder nicht leitenden Oberflächenschicht versehenen Bauteilen aus Metall, bei der die ebenen Bereiche fluchtende Bohrungen zur Aufnahme einer aus Schraube und Mutter bestehenden Schraubverbindung aufweisen,
dadurch gekennzeichnet,
daß die Bohrung des der Mutter (17) zugekehrten Bauteils (12) als Aufnahme (13) erweitert ist,
daß auf der freien Seite der Mutter (17) ein Krallenbügel (20) unverlierbar und unverdrehbar festgelegt ist, der sich mit ausgestanzten Krallen (25,29) seiner Seitenschenkel (24,28) auf der der Mutter (17) zugekehrten Seite des der Mutter (17) zugekehrten Bauteils (12) abstützt, und daß die Seitenschenkel (24,28) des Krallenbügels (20) U-förmig abgewinkelte Verlängerungen (26,30) aufweisen, die durch die Aufnahme (13) des der Mutter (17) zugekehrten Bauteils (12) hindurchgeführt sind und sich mit weiteren ausgestanzten Krallen (27,31) außerhalb der Bohrung (11) auf der Seite des der Mutter (17) abgekehrten Bauteils (10) abstützen, die dem der Mutter (17) zugekehrten Bauteil (12) zugekehrt ist.

2. Vorrichtung nach Anspruch 1,
dadurch gekennzeichnet,
daß der Krallenbügel (20) in seinem Mittelsteg einen Durchbruch (21) aufweist, durch den ein im Querschnitt darauf angepaßter Ansatz (19) der Mutter (17) geführt ist, und
daß durch Verformung des Ansatzes (19) der Krallenbügel unverlierbar mit der Mutter (17) verbunden ist.

3. Vorrichtung nach Anspruch 1 oder 2,
dadurch gekennzeichnet,
daß die Mutter (17) umfangsseitig einander gegenüberliegende Abflachungen aufweist und
daß die Seitenschenkel (24,28) des Krallenbügels (20) die Mutter (17) auf zwei einander gegenüberliegenden Seiten einschließen, während am Mittelsteg des Krallenbügels (20) vorgesehene Lappen (22,23) auf die Abflachungen der Mutter (17) abgewinkelt sind und den Krallenbügel (20) unverdrehbar an der Mutter (17) festlegen.

4. Vorrichtung nach einem der Ansprüche 1 bis 3,
dadurch gekennzeichnet,
daß die Verlängerungen (26,30) jeweils zwischen zwei Krallen (25,29) der Seitenschenkel (24,28) weitergeführt und U-förmig abgewinkelt sind.

5. Vorrichtung nach Anspruch 4,
dadurch gekennzeichnet,
daß die U-förmig abgewinkelten Verlängerungen (26,29) zu den Wänden der Aufnahme (13) hin selbst Aufnahmen für das der Mutter (17) zugekehrte Bauteil (12) bilden.

6. Vorrichtung nach Anspruch 4 oder 5,
dadurch gekennzeichnet,
daß die Verlängerungen (26,30) der Seitenschenkel (24,28) im Endbereich durch Schlitze unterteilt sind und jeweils in zwei Krallen (27,31) auslaufen.

7. Vorrichtung nach einem der Ansprüche 1 bis 6,
dadurch gekennzeichnet,
daß die Verlängerungen (26,30) mit der ersten Abwinkelung etwa parallel zur zugekehrten Seite des der Mutter zugekehrten Bauteils (12) verlaufen und sich zwischen die Mutter (17) und das Bauteil (12) erstrecken.

8. Vorrichtung nach einem der Ansprüche 1 bis 7,
dadurch gekennzeichnet,
daß die Krallen (5,29) und die weiteren Krallen (27,31) des Krallenbügels (20) in scharfe Kanten oder Spitzen auslaufen.

9. Vorrichtung nach einem der Ansprüche 1 bis 8,
dadurch gekennzeichnet,
daß der Krallenbügel (20) als Stanz- und Biegeteil ausgebildet und hergestellt ist und aus federndem Metall besteht.

10. Vorrichtung nach einem der Ansprüche 1 bis 9,
dadurch gekennzeichnet,
daß die Schraube (14) mit dem Kopf (16) auf der einsehbaren Seite des der Mutter (17) abgekehrten Bauteils (10) angeordnet ist.

A 6708